# EUROPÄISCHE PATENTSCHRIFT

(11) **EP 1 443 352 B1**
(45) Veröffentlichungstag und Bekanntmachung des Hinweises auf die Patenterteilung: **19.04.2006**
(21) Anmeldenummer: 03001803.0
(22) Anmeldetag: 28.01.2003
(51) Int. Cl.: G02B 21/00, G02B 21/06, G02B 21/36, G01B 5/26

(54) **Optischer Aufbau zum Aufsetzen auf ein Mikroskop für die Vermessung von periodischen Bewegungen einer Mikrostruktur**
Optical attachment for a microscope for measuring periodic motion of a microstructure
Arrangement optique destiné à étre connecté à un microscope pour la mesure de mouvements d'une microstructure

(43) Veröffentlichungstag der Anmeldung: 04.08.2004
(73) Patentinhaber: Polytec GmbH, 76337 Waldbronn (DE)
(72) Erfinder: Rembe, Christian, Dr., 76337 Waldbronn (DE); Dräbenstedt, Alexander, Dr., 76337 Waldbronn (DE)
(74) Vertreter: Kaiser, Magnus

(56) Entgegenhaltungen:
- WO-A-00/33727
- US-A- 6 084 672
- US-A1- 2002 089 740
- US-B1- 6 181 431
- US-B1- 6 404 545
- SMITH W J: "MODERN OPTICAL ENGINEERING THE DESIGN OF OPTICAL SYSTEMS" 1966 , MC GRAW - HILL BOOK COMPANY , NEW YORK XP002244415 * Seite 212 - Seite 213 * * Abbildung 9.3 *
- PATENT ABSTRACTS OF JAPAN vol. 010, no. 160 (P-465), 7. Juni 1986 (1986-06-07) -& JP 61 013233 A (NIHON KOUGAKU KOGYO KK), 21. Januar 1986 (1986-01-21)

## Beschreibung

Die Erfindung betrifft einen optischen Aufbau zum Aufsetzen auf ein Mikroskop für die Vermessung von periodischen Bewegungen einer Mikrostruktur.

Insbesondere die miniaturisierten Bauteile in der Mikrosystemtechnik erfordern besondere Messsysteme, wenn die Bewegungen und Freiheitsgrade der einzelnen Elemente des Mikrosystems untersucht und vermessen werden sollen. Ein Mikroskop und eine elektronische Kamera sind hierbei meist unverzichtbar.

Für Bewegungen und Freiheitsgrade von Bauteilen senkrecht zur Objektebene des Mikroskops hat sich die interferometrische Messung mittels eines scannenden Vibrometers bewährt. Entsprechend der Wellenlängen des hierbei verwendeten Lichtes lassen sich kleinste Bewegungen der miniaturisierten Bauteile messen.

So wird in der US 6,084,672 A eine Vorrichtung zur optischen Vermessung eines Objektes, insbesondere zur Weg- und/oder Schwingungsmessung offenbart. Die Messung wird mittels eines Laser-Interferometers durchgeführt, wobei dessen Messstrahl in den Strahlengang eines Mikroskops eingekoppelt wird. Der von dem Objekt reflektierte Messstrahl wird wiederum aus dem Strahlengang des Mikroskops ausgekoppelt und in das Messsystem zurückgeführt. Weiterhin umfasst die Vorrichtung eine Einrichtung zum etwa parallelen Verschieben des Messstrahls, so dass mehrere, nebeneinander liegende Punkte auf dem Objekt vermessen werden können, ohne das Messobjekt zu bewegen.

Bewegungen der Bauteile in der Objektebene des Mikroskops, wie beispielsweise die Rotation eines Mikro-Zahnrades, erfordern eine andere Messmethode. Hierzu wird üblicherweise ein Mikroskop mit einer aufgesetzten elektronischen Kamera verwendet, die eine Reihe von Bildern erzeugt, welche die Bewegung elektronisch auswertbar darstellen. Das besondere Problem bei Mikrostrukturen besteht allerdings darin, dass die Bewegungen der Bauelemente im allgemeinen viel schneller ablaufen (in Frequenzen bis zu 100 MHz), als das kleinste Zeitfenster beträgt, welches die Kamera benötigt, um ein Bild aufnehmen zu können. Um dieses Problem zu lösen, wird ein spezielles Mikroskop verwendet, das mit einer Stroboskoplampe versehen ist. Die Stroboskoplampe sendet Lichtpulse in einer Pulsfrequenz aus, die einer Anregungsfrequenz entspricht, mit der das zu vermessende Bauteil gleichzeitig zu periodischen Bewegungen angeregt wird. Jeder Lichtpuls der Stroboskoplampe trifft also in immer der gleichen Pha-senlage der periodischen Bewegung auf das Bauteil, so dass die elektronische Kamera ein Bild aufnimmt, das einem Stroboskoppuls entspricht, das jedoch in Wirklichkeit aus mehreren aufintegrierten Stroboskoppulsen zusammengesetzt ist. Durch ein Gegeneinander-Verschieben der Phasenlagen der Stroboskoppulse und der Anregungsfrequenz für die Bewegung des zu vermessenden Bauteils kann dann von der elektronischen Kamera das nächste Bild des Bewegungsablaufs aufgenommen werden. Im Ergebnis führt dies zu Bilddaten, die den Bewegungsablauf des zu vermessenden Bauteils darstellen.

Während bereits scannende Vibrometer erhältlich sind, die auf den normierten Kameraanschluss (C-mount) eines handelsüblichen Mikroskops aufgesetzt werden können und so die Vermessung von Bewegungen von Mikrostrukturen senkrecht zur Objektebene auf einfachste Weise ermöglichen, sind zur stroboskopischen Messung der in der Objektebene erfolgenden Bewegungen des Bauteils also spezielle Mikroskope mit Stroboskoplampe notwendig.

Nun sind in den einschlägigen Labors meist schon Mikroskope vorhanden. Der Erfindung liegt daher die Aufgabe zugrunde, eine stroboskopische Erfassung der Bewegung von Mikrostrukturen in der Objektebene des zum Messen verwendeten Mikroskops zu ermöglichen, ohne ein speziell ausgebildetes Mikroskop einsetzen oder ein Standardmikroskop modifizieren zu müssen.

Gelöst ist diese Aufgabe durch einen optischen Aufbau mit den Merkmalen des beigefügten Patentanspruchs 1.

Vorteilhafte Weiterbildungen des erfindungsgemäßen optischen Aufbaus sind in den Patentansprüchen 2 bis 8 niedergelegt.

Der beigefügte Patentanspruch 9 definiert ein modulares System unter Verwendung des optischen Aufbaus nach den Ansprüchen 1 bis 8.

Die Erfindung stellt also einen optischen Aufbau zur Verfügung, der auf den Kameraanschluss des Mikroskops aufgesetzt werden kann und auf der anderen Seite wiederum einen entsprechend ausgebildeten Kameraanschluss aufweist. Gleichzeitig enthält dieser optische Aufbau eine untere Feldlinse und eine obere Feldlinse sowie ein zwischen diesen beiden Feldlinsen angeordnetes Abbildungs-Linsensystem. Diese optischen Bauteile sind so dimensioniert und angeordnet, dass das am Kameraanschluss des Mikroskops vorhandene erste Objektbild von unterhalb der unteren Feldlinse im Abbildungsmaßstab 1:1 auf ein zweites Objektbild oberhalb der oberen Feldlinse und somit am oberen Anschluss für eine Kamera abgebildet wird. Es handelt sich beim erfindungsgemä-ßen optischen Aufbau also um eine Art Zwischenstück, mit dem das von einer elektronischen Kamera aufzunehmende Objektbild ganz einfach weiter nach oben versetzt wird.

Gleichzeitig - und dies bewirkt den großen Vorteil der Erfindung gegenüber den bislang üblichen speziell ausgebildeten Mikroskopen - enthält der erfindungsgemäße optische Aufbau in seinem Strahlengang zwischen den beiden Feldlinsen einen Strahlteiler zum Einkoppeln von Lichtpulsen einer Stroboskoplampe. Aufgrund der Erfindung ist es also erstmals möglich, stroboskopische Messungen zur Erfassung von Mikrostrukturbewegungen mit einem handelsüblichen, standardisierten Mikroskop ohne spezielle Anpassungen desselben vorzunehmen. Denn solche Mikroskope sind in aller Regel mit einem normierten C-mount zum Anschluss einer Kamera versehen. Der erfindungsgemäße Aufsatz versetzt also die Schnittstelle zum Ankoppeln einer elektronischen Kamera nach oben und ermöglicht in der hierdurch gewonnenen Strecke des Strahlengangs, Lichtpulse einer Stroboskoplampe einzukoppeln, ohne irgendwelche Veränderungen am Mikroskop selbst vornehmen zu müssen. Gleichwohl wird die volle Funktionalität des Mikroskops gewahrt, da ein (standardisierter) Kameraanschluss auch nach dem Aufsetzen des erfindungsgemäßen optischen Aufbaus vorhanden ist und sowohl für eine elektronische Kamera als auch für ein scannendes Vibrometer oder ähnliches genutzt werden kann.

Besondere Vorteile ergeben sich, wenn die Feldlinsen und das Abbildungs-Linsensystem so dimensioniert und angeordnet sind, dass die Einzelstrahlen der Strahlenbündel eines jeden Bildpunktes des ersten Objektbildes aus dem nach oberhalb der oberen Feldlinse abgebildeten zweiten Objektbild unter den gleichen Winkeln austreten, wie aus dem ersten Objektbild. Hierdurch wird eine Kaskadierung des Systems möglich, und es können zwei oder noch mehr optische Aufbauten nach der Erfindung hintereinander geschaltet werden. Aber auch ohne die Kaskadierungsmöglichkeit ist eine solche Weiterbildung der Erfindung vorteilhaft, da alle weiteren Geräte, die ebenfalls Licht in den Strahlengang einkoppeln, mit derselben Justage verwendet werden können, als wenn sie direkt auf das Mikroskop gesetzt würden.

Vorzugsweise ist der Strahlteiler, der erfindungsgemäß im optischen Aufbau vorhanden ist, so dimensioniert und angeordnet, dass die Lichtpulse der Stroboskoplampe gemäß den Köhlerschen Beleuchtungsregeln in den Auflichtstrahlengang des Mikroskops eingekoppelt werden. Gemäß dieser Beleuchtungsregeln treffen die von einem Punkt der Lichtquelle ausgehenden divergierenden Einzelstrahlen immer parallel auf der Objektebene auf, so dass sich eine sehr gleichmäßige Beleuchtung des Objektfeldes selbst dann ergibt, wenn die Lichtquelle ungleichmäßig flächig abstrahlt.

Vorzugsweise ist die Stroboskoplampe selbst Teil des optischen Aufbaus. Hierdurch ergibt sich dann eine feste räumliche Zuordnung der Stroboskoplampe zum Strahlteiler. Somit entfällt jedwede Justierarbeit beim Einkoppeln des Stroboskoplichts über den Strahlteiler in den Auflichtstrahlengang des Mikroskops.

Die Stroboskoplampe ist vorzugsweise eine LED mit einem Öffnungswinkel θ und mit einer Leuchtfläche eines Durchmessers d, bei der für den Öffnungswinkel und den Durchmesser der Leuchtfläche die Beziehung: d*θ<0,5 entspricht, wobei d in mm und θ in rad einzusetzen sind. Weiter bevorzugt weist die LED eine optische Leistung von mehr als 10 mW auf. Diese Randbedingungen haben sich als optimal herausgestellt, um den erfindungsgemäßen Erfolg zu erzielen.

Das Abbildungs-Linsensystem ist vorzugsweise ein zusammengesetztes System, das eine aberrationsfreie Abbildung gewährleistet. Solchen Linsensysteme sind an sich bekannt.

Bevorzugterweise ist der erfindungsgemäße optische Aufbau so ausgebildet, dass das erste Objektbild ohne Vignettierung auf das zweite Objektbild abgebildet wird. Dies gewährleistet ein Maximum an Lichtausbeute, Abbildungsschärfe und Kaskadierbarkeit.

Das erfindungsgemäße Lösungsprinzip ist weiterhin verkörpert in einem modularen System zur Vermessung von periodischen Bewegungen einer Mikrostruktur, die neben einem Mikroskop, welches mit einem normierten Kameraanschluss versehen ist, auch eine Stroboskoplampe, eine elektronische Kamera und ein scannendes Vibrometer aufweist, während erfindungsgemäß außerdem ein optischer Aufbau vorhanden ist, wie er oben beschrieben wurde. Der optische Aufbau kann dann anstatt der Kamera an den Kameraanschluss des Mikroskops angeschlossen werden. Alternativ kann das scannende Vibrometer auf den Kameraanschluss des Mikroskops aufgesetzt werden, während es aber auch möglich ist, das scannende Vibrometer auf den optischen Aufbau aufzusetzen. Entsprechend kann die elektronische Kamera an den Kameraanschluss des Mikroskops, auf den optischen Aufbau oder auf das scannende Vibrometer aufgesetzt werden. Es versteht sich, dass zu diesem modularen System noch eine Synchronisationselektronik und ein Auswerterechner vorhanden sein sollten, um die stroboskopische Untersuchung durchführen und auswerten zu können.

Ein Ausführungsbeispiel der Erfindung wird im folgenden an Hand der beigefügten Zeichnungen näher beschrieben und erläutert. Es zeigen:
- Figur 1: eine schematische Darstellung eines Beispiels für einen erfindungsgemäßen optischen Aufbau;
- Figur 2: eine schematische Darstellung eines Beispiels für ein komplettes Messsystem mit erfindungsgemäßem optischen Aufbau;
- Figur 3: eine schematische Darstellung eines Beispiels für ein erfindungsgemäßes modulares System;
- Figur 4: eine schematische Darstellung des Standes der Technik.

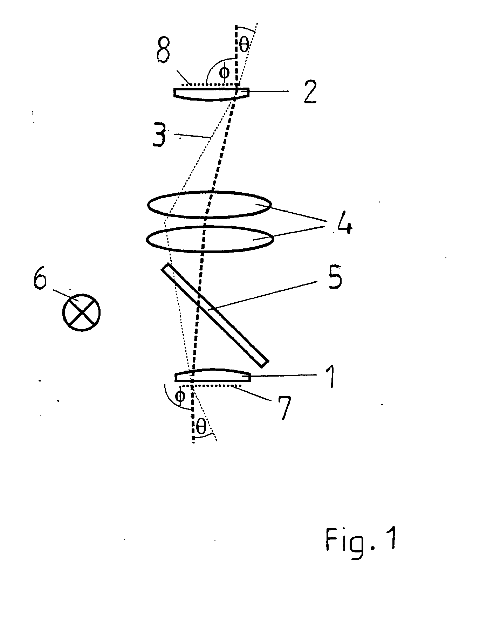

Figur 1 zeigt den prinzipiellen Aufbau eines erfindungsgemäßen optischen Aufbaus, bestehend aus einer unteren Feldlinse 1, einer oberen Feldlinse 2, einem im Strahlengang 3 derselben liegenden Abbildungs-Linsensystem 4 und einem Strahlteiler 5 zum Einkoppeln der Lichtpulse einer Stroboskoplampe 6 in den Mikroskopstrahlengang. Wie Figur 1 verdeutlicht, wird durch den erfindungsgemäßen optischen Aufbau ein erstes Objektbild 7 nach oberhalb der oberen Feldlinse 2 auf ein zweites Objektbild 8 abgebildet. Die Besonderheit des hier gezeigten Ausführungsbeispiels liegt darin, dass die Einzelstrahlen der Strahlenbündel eines jeden Bildpunktes des ersten Objektbildes 7 aus dem zweiten Objektbild 8 unter den gleichen Winkeln θ, φ austreten, wie aus dem ersten Objektbild 7 selbst. Das Abbildungs-Linsensystem 4 ist nach diesem Ausführungsbeispiel ein aberrationskorrigiertes Linsensystem zur 1:1-Abbildung.

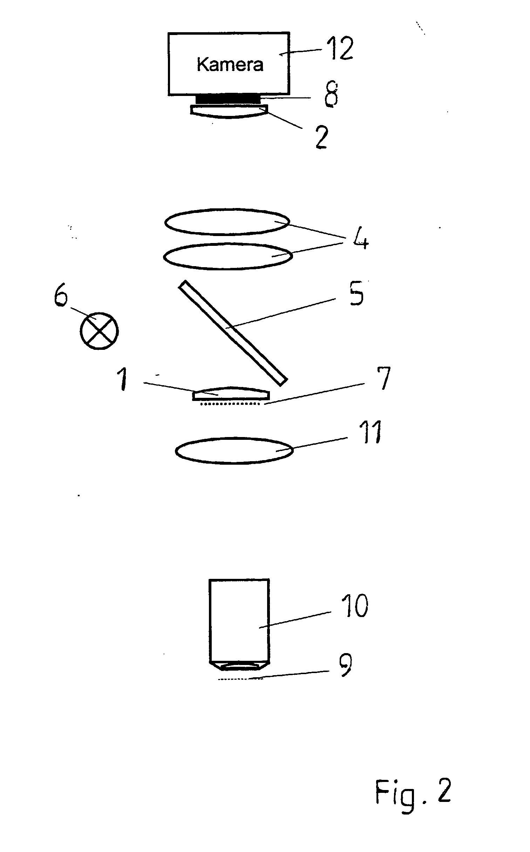

Figur 2 zeigt in einer ähnlich schematischen Darstellung, wie der erfindungsgemäße optische Aufbau zusammen mit den anderen Bauteilen der Messvorrichtung zusammenwirkt. Im Bereich der unteren Feldlinse 1 ist wiederum das erste Objektbild 7 angedeutet, das ein Objekt 9 über ein Mikroskopobjektiv 10 und eine Tubuslinse 11 des Mikroskops darstellt. Der erfindungsgemäße optische Aufbau nun, bestehend aus der unteren Feldlinse 1, der oberen Feldlinse 2, dem Abbildungs-Linsensystem 4 sowie dem Strahlteiler 5 und einer fest eingebauten Stroboskoplampe 6, "verlegt" das erste Objektbild 7 in eine weiter oben liegende Ebene auf das zweite Objektbild 8 oberhalb der oberen Feldlinse 2. Dieses zweite Objektbild 8 wird von einer elektronischen Kamera 12 an einem Normanschluss (C-mount) detektiert und kann somit elektronisch ausgewertet werden.

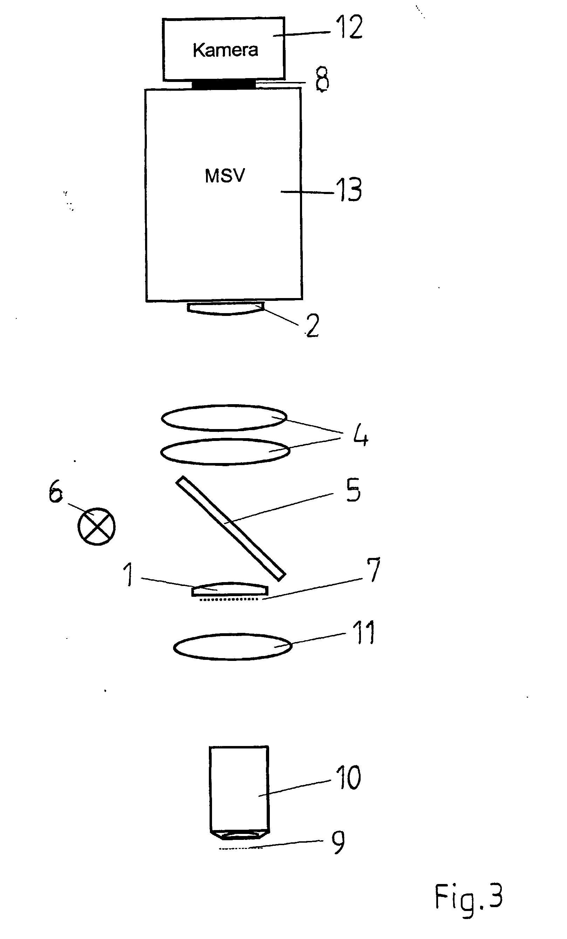

Figur 3 zeigt ein modulares System mit dem beschriebenen optischen Aufbau gemäß der Erfindung, mit einer unteren Feldlinse 1, einer oberen Feldlinse 2, einem Abbildungs-Linsensystem 4, einem Strahlteiler 5 und einer Stroboskoplampe 6, während das handelsübliche Mikroskop - hier dargestellt lediglich das Mikroskopobjektiv 10 und die Tubuslinse 11 - das Objekt 9 auf das erste Objektbild 7 abbildet. Auch die Kameraanschlussstelle oberhalb der oberen Feldlinse 2, auf die durch die Erfindung nun ein zweites Objektbild projiziert wird, ist mit einem normierten Kameraanschluss versehen, so dass hier ein scannendes Vibrometer 13, und erst auf diesem eine elektronische Kamera 12 aufgesetzt sind.

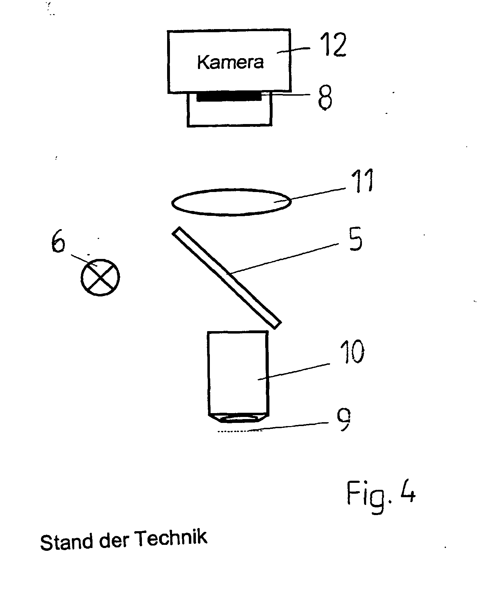

Figur 4 schließlich zeigt ein Aufbau nach dem Stand der Technik. Deutlich zu sehen ist, dass das Licht der Stroboskoplampe 6 zwischen dem Mikroskopobjektiv 10 und der Tubuslinse 11 über einen Strahlteiler 5 eingekoppelt wird. Dies erfordert eine feste Zuordnung und Einbindung der Stroboskoplampe 6 in das Mikroskop, das hierdurch eine teure Sonderanfertigung wird, da die Beleuchtungsanschlüsse herstellerspezifisch ausgebildet sind.

### Bezugszeichenliste

- 1: Feldlinse (untere)
- 2: Feldlinse (obere)
- 3: Strahlengang
- 4: Abbildungs-Linsensystem
- 5: Strahlteiler
- 6: Stroboskoplampe
- 7: Objektbild (erstes)
- 8: Objektbild (zweites)
- 9: Objekt
- 10: Mikroskopobjektiv
- 11: Tubuslinse
- 12: Kamera
- 13: scannendes Vibrometer

## Patentansprüche

1. Optischer Aufbau zum Aufsetzen auf ein Mikroskop für die Vermessung von periodischen Bewegungen einer Mikrostruktur,
mit einem Abbildungs-Linsensystem (4)
und mit einem Strahlteiler (5) zum Einkoppeln von Licht in den Strahlengang des optischen Aufbaus in Richtung des Mikroskops,
wobei der optische Aufbau in einem unteren Bereich für das Aufsetzen auf einen Kameraanschluss des Mikroskops angepasst ist und in einem oberen Bereich für das Anschließen einer Kamera (12) oder dergleichen dem Kameraanschluss des Mikroskops entsprechend ausgebildet ist,
**dadurch gekennzeichnet,**
**dass** der Aufbau eine untere Feldlinse (1) im unteren Bereich des Aufbaus und eine obere Feldlinse (2) im oberen Bereich des Aufbaus umfasst,
wobei das Abbildungs-Linsensystem (4) und der Strahlteiler (5) zwischen den beiden Feldlinsen (1,2) in deren Strahlengang (3) angeordnet sind und wobei die Feldlinsen (1,2) und das Abbildungs-Linsensystem (4) so dimensioniert und angeordnet sind, dass das am Kameraanschluss des Mikroskops vorhandene erste Objektbild (7) von unterhalb der unteren Feldlinse (1) nach oberhalb der oberen Feldlinse (2) auf ein zweites Objektbild (8) abgebildet wird und dass die Einzelstrahlen der Strahlenbündel eines jeden Bildpunktes des ersten Objektbildes (7) aus dem nach oberhalb der oberen Feldlinse (2) abgebildeten zweiten Objektbild (8) unter den im Wesentlichen gleichen Winkeln austreten, wie aus dem ersten Objektbild (7) und
**dass** der Aufbau eine Stroboskoplampe (6) umfasst, zur Einkopplung von Lichtpulsen über den Strahlteiler (5) in den Strahlengang (3) in Richtung des Mikroskops.

2. Optischer Aufbau nach Anspruch 1,
**dadurch gekennzeichnet,**
**dass** der Strahlteiler (5) so dimensioniert und angeordnet ist, dass die Lichtpulse der Stroboskoplampe (6) gemäß den Köhlerschen Beleuchtungsregeln in den Auflichtstrahlengang des Mikroskops eingekoppelt werden.

3. Optischer Aufbau nach einem der Ansprüche 1 oder 2,
**dadurch gekennzeichnet,**
**dass** die Stroboskoplampe (6) eine LED mit einem Öffnungswinkel θ und mit einer Leuchtfläche mit einem Durchmesser d ist, für welche die Beziehung: d*θ < 0,5 gilt, wobei d in mm und θ in rad einzusetzen sind.

4. Optischer Aufbau nach Anspruch 3,
**dadurch gekennzeichnet,**
**dass** die LED eine optische Leistung von mehr als 10 mW aufweist.

5. Optischer Aufbau nach einem der Ansprüche 1 bis 4,
**dadurch gekennzeichnet,**
**dass** das Abbildungs-Linsensystem (4) für eine aberrationsfreie Abbildung ausgebildet ist.

6. Optischer Aufbau nach einem der Ansprüche 1 bis 5,
**dadurch gekennzeichnet,**
**dass** die Feldlinsen (1, 2) des Abbildungs-Linsensystems (4) so dimensioniert und angeordnet sind, dass das erste Objektbild (7) ohne Vignettierung auf das zweite Objektbild (8) abgebildet wird.

7. Modulares System zur Vermessung von periodischen Bewegungen einer Mikrostruktur,
mit einem Mikroskop, das mit einem normierten Kameraanschluss versehen ist,
mit einer Stroboskoplampe (6),
mit einem optischen Aufbau nach einem der Ansprüche 1 bis 6,
mit einem scannenden Vibrometer (13) zum Aufsetzen auf den Kameraanschluss des Mikroskops oder auf den optischen Aufbau, und mit einer elektronischen Kamera (12) zum Anschließen an den Kameraanschluss des Mikroskops, auf den optischen Aufbau oder auf das scannende Vibrometer (13).

## Claims

1. Optical assembly for mounting on a microscope for the measurement of periodic movements of a microstructure, with an imaging lens system (4) and with a beam splitter (5) for coupling light into the beam path (3) of the optical assembly in the direction of the microscope, wherein the optical assembly is adapted in a lower region for mounting on a camera connection of the microscope and in an upper region for connection of a camera (12) or the like is constructed to correspond to the camera connection of the microscope, **characterised in that** the comprises a lower field lens (1) in the lower region of the assembly and an upper field lens (2) in the upper region of the assembly, wherein the imaging lens system (4) and the beam splitter (5) are disposed between the two field lenses (1, 2) in the beam path thereof, and wherein the field lenses (1, 2) and the imaging lens system (4) are dimensioned and disposed so that the first object image (7) present on the camera connection of the microscope is imaged from below the lower field lens (1) to above the upper field lens (2) onto a second object image (8), and that the individual rays of the beam from each image point of the first object image (7) emerge from the second object image (8) imaged above the upper field lens (2) at substantially the same angles as from the first object image (7), and that the assembly comprises a stroboscope lamp (6) for coupling the light pulses via the beam splitter (5) into the beam path (3) in the direction of the microscope.

2. Optical assembly as claimed in Claim 1, **characterised in that** the beam splitter (5) is dimensioned and disposed in such a way that the light pulses of the stroboscope lamp (6) are coupled into the incident beam path of the microscope according to the rules of Köhler illumination.

3. Optical assembly as claimed in any one of Claims 1 or 2, **characterised in that** the stroboscope lamp (6) is an LED with an aperture angle *θ* and with an illuminated surface with a diameter d for which the relation: d**θ* < 0.5, wherein d is in mm and *θ* is in rad.

4. Optical assembly as claimed in Claim 3, **characterised in that** the LED has an optical output of more than 10 mW.

5. Optical assembly as claimed in any one of Claims 1 to 4, **characterised in that** the imaging lens system (4) is designed for aberration-free imaging.

6. Optical assembly as claimed in any one of Claims 1 to 5, **characterised in that** the field lenses (1, 2) of the imaging lens system (4) are dimensioned and disposed so that the first object image (7) is imaged onto the second object image (8) without vignetting.

7. Modular system for the measurement of periodic movements of a microstructure, with a microscope which is provided with a standardised camera connection, with a stroboscope lamp (6), with an optical assembly as claimed in any one of Claims 1 to 6, with a scanning vibrometer (13) for mounting on the camera connection of the microscope or on the optical assembly, and with an electronic camera (12) for connection to the camera connection of the microscope, the optical assembly or the scanning vibrometer (13).

## Revendications

1. Arrangement optique destiné à être placé sur un microscope pour la mesure de mouvements périodiques d'une microstructure,
comprenant un système à lentilles (4) formateur d'images
et un diviseur de rayonnements (5) pour l'introduction de lumière dans la trajectoire de rayonnement de l'arrangement optique, en direction du microscope,
ledit arrangement optique étant adapté, dans une région inférieure, pour la mise en place sur un raccord de caméra du microscope et étant réalisé, dans une région supérieure, en concordance avec le raccord de caméra du microscope en vue de la connexion d'une caméra (12) ou d'un dispositif similaire,
**caractérisé par le fait**
**que** l'arrangement comprend une lentille inférieure de champ (1) dans la région inférieure dudit arrangement, et une lentille supérieure de champ (2) dans la région supérieure dudit arrangement,
le système à lentilles (4) formateur d'images et le diviseur de rayonnements étant interposés entre les deux lentilles de champ (1, 2), sur la trajectoire de rayonnements (3) de ces dernières,
et lesdites lentilles de champ (1, 2) et ledit système à lentilles (4) formateur d'images étant dimensionnés et disposés de façon telle que la première image d'objet (7), présente sur le raccord de caméra du microscope, soit reproduite sur une seconde image d'objet (8) depuis la zone sous-jacente à la lentille inférieure de champ (1) vers la zone sus-jacente à la lentille supérieure de champ (2) ;
par le fait que les rayonnements individuels du faisceau de rayonnements de chaque point d'image de la première image d'objet (7) sortent, de la seconde image d'objet (8) reproduite vers la zone sus-jacente à la lentille supérieure de champ (2), pour l'essentiel en décrivant les mêmes angles que lorsqu'ils sortent de la première image d'objet (7) ; et
par le fait que l'arrangement comprend une lampe stroboscopique (6) en vue de l'introduction d'impulsions lumineuses dans la trajectoire de rayonnements (3), par l'intermédiaire du diviseur de rayonnements (5), dans la direction du microscope.

2. Arrangement optique selon la revendication 1,
**caractérisé par le fait**
**que** le diviseur de rayonnements (5) est dimensionné et disposé de façon telle que les impulsions lumineuses de la lampe stroboscopique (6) soient introduites, conformément aux lois d'illumination de Köhler, dans la trajectoire des rayonnements de lumière réfléchie du microscope.

3. Arrangement optique selon l'une des revendications 1 ou 2,
**caractérisé par le fait**
**que** la lampe stroboscopique (6) est une diode électroluminescente présentant un angle d'ouverture θ et une surface d'illumination ayant un diamètre d, obéissant à la relation d*θ < 0,5, dans laquelle d est exprimé en mm et θ est exprimé en rad.

4. Arrangement optique selon la revendication 3,
**caractérisé par le fait**
**que** la diode électroluminescente présente une puissance optique excédant 10 mW.

5. Arrangement optique selon l'une des revendications 1 à 4,
**caractérisé par le fait**
**que** le système à lentilles (4) formateur d'images est réalisé pour une reproduction d'images exempte d'aberrations.

6. Arrangement optique selon l'une des revendications 1 à 5,
**caractérisé par le fait**
**que** les lentilles de champ (1, 2) du système à lentilles (4) formateur d'images sont dimensionnées et disposées de façon telle que la première image d'objet (7) soit reproduite sur la seconde image d'objet (8) sans aucun vignettage.

7. Système modulaire pour mesurer des mouvements périodiques d'une microstructure,
comprenant un microscope muni d'un raccord de caméra normalisé,
une lampe stroboscopique (6),
un arrangement optique selon l'une des revendications 1 à 6,
un vibromètre d'exploration (13) destiné à être mis en place sur le raccord de caméra du microscope ou sur l'arrangement optique,
et une caméra électronique (12) destinée à être connectée au raccord de caméra du microscope, sur l'arrangement optique ou sur le vibromètre d'exploration (13).
